# FASCICULE DE BREVET EUROPEEN

(11) **EP 1 477 396 B1**
(45) Date de publication et mention de la délivrance du brevet: **25.07.2007**
(21) Numéro de dépôt: 04291144.6
(22) Date de dépôt: 04.05.2004
(51) Int. Cl.: B62D 65/00, B60R 13/08

(54) **Procédé et dispositif de pose d'une feuille d'étanchéité d'une porte de véhicule automobile**
Verfahren und Werkzeug für den Einbau eines Feuchtschutzes in einer Kraftfahrzeug-Tür
Method and device for placing a door humidity shield within a vehicle door

(30) Priorité: 12.05.2003 FR 0305698
(43) Date de publication de la demande: 17.11.2004
(73) Titulaire: Peugeot Citroën Automobiles S.A., 78140 Vélizy Villacoublay (FR)
(72) Inventeur: De Bentzmann, Alain, 78000 Versailles (FR)
(74) Mandataire: Lanceplaine, Jean-Claude

(56) Documents cités:
- EP-A- 0 226 706
- US-B1- 6 676 195
- US-B2- 6 422 640

## Description

La présente invention concerne un procédé et un dispositif de pose d'une feuille d'étanchéité d'une porte de véhicule automobile.

De façon classique par example EP 0226706 une porte de véhicule automobile comprend une partie inférieure formant un caisson et une partie supérieure formant un cadre délimitant une ouverture obturable par une vitre déplaçable à travers une fente du caisson.

Cette fente est munie d'un joint d'étanchéité à lèvre limitant en particulier la pénétration des eaux de pluie dans le caisson. Ce caisson est formé par une paroi métallique externe et par une doublure métallique interne. La porte comprend également un panneau interne de garnissage de la porte sur lequel sont montés différents équipements préassemblés et qui est destiné à être fixé sur la doublure de ladite porte. La porte comprend encore une feuille d'étanchéité interposée entre la doublure interne de la porte et le panneau de garnissage de façon à séparer une zone sèche du caisson d'une zone humide de ce caisson.

La zone humide reçoit notamment les eaux de pluie ruisselant sur la vitre et pénétrant dans le caisson à travers la fente de passage de la vitre, malgré la présence du joint à lèvre.

La fixation de la feuille d'étanchéité sur la doublure de porte est réalisée au moyen d'un cordon de produit adhésif de contour correspondant sensiblement au contour de cette doublure et en exerçant un effort de mise en pression afin d'écraser le cordon de produit adhésif.

Cet effort de mise en pression est appliqué sur le cordon au moyen d'un outil qui comporte notamment une plaque rigide ce qui présente des inconvénients.

En effet, ce type d'outil ne peut pas suivre les déformations de la doublure de porte, ni rattraper les dérives locales du galbe de cette doublure. De ce fait, la répartition de la mise en pression du cordon de produit adhésif n'est pas homogène et n'est pas maîtrisée ce qui peut entraîner un mauvais collage dans certaines zones de la feuille et ainsi des défauts d'étanchéité.

L'invention a pour but de proposer un procédé et un dispositif de pose d'une feuille d'étanchéité d'une porte de véhicule automobile qui évite les inconvénients précédemment mentionnés et qui est simple et peu coûteux à mettre en oeuvre.

L'invention a donc pour objet un procédé de pose d'une feuille d'étanchéité d'une porte de véhicule automobile, la feuille d'étanchéité comprenant sur sa face destinée à être appliquée sur une doublure interne de ladite porte, un cordon de produit adhésif de contour correspondant sensiblement au contour de la doublure, caractérisé en ce que :
- on pose sur la doublure de porte, la feuille d'étanchéité munie du cordon de produit adhésif en appliquant ce cordon de produit adhésif sur ladite doublure,
- on applique sur la feuille d'étanchéité, une contre-forme en matériau souple ayant un contour correspondant au contour dudit cordon et portée par une plaque support en matériau semi-rigide, et
- on exerce sur la contre-forme par l'intermédiaire de la plaque support, un effort de mise en pression pour écraser le cordon de produit adhésif et fixer la feuille d'étanchéité sur la doublure de porte.

L'invention a également pour objet un dispositif de pose d'une feuille d'étanchéité d'une porte de véhicule automobile, la feuille d'étanchéité comprenant sur sa face destinée à être appliquée sur une doublure interne de ladite porte, un cordon de produit adhésif de contour correspondant sensiblement au contour de la doublure, caractérisé en ce qu'il comprend, d'une part, un outil comportant une contre-forme en matériau souple ayant un contour correspondant au contour dudit cordon, destinée à être appliquée sur la face de la feuille d'étanchéité opposée à celle munie de ce cordon et une plaque support en matériau semi-rigide portant ladite contre-forme et, d'autre part, une armature en matériau rigide portant l'outil et un actionneur interposé entre l'armature et la plaque support et exerçant sur l'outil un effort de mise en pression pour écraser le cordon de produit adhésif.

Selon d'autres caractéristiques de l'invention:
- la rigidité globale de l'outil est inférieure à la rigidité de la doublure de porte,
- le matériau souple de la contre-forme a une dureté comprise entre 30 et 50 SHORE A et de préférence égale à 40 SHORE A,
- le matériau semi-rigide de la plaque support a une dureté comprise entre 80 et 110 SHORE A et de préférence égale à 90 SHORE A,
- l'actionneur est formé par au moins une vessie gonflable de contour correspondant sensiblement au contour de la contre-forme,
- l'actionneur est formé par plusieurs vessies gonflables réparties le long du contour de la contre-forme,
- l'actionneur est formé par au moins un vérin hydraulique ou pneumatique.

L'invention sera mieux comprise à la lecture de la description qui va suivre, donnée à titre d'exemple et faite en se référant aux dessins annexés, sur lesquels :
- la Fig. 1 est une vue schématique en perspective éclatée d'un exemple de réalisation d'une porte de véhicule automobile,
- la Fig. 2 est une vue schématique en perspective éclatée du dispositif de pose d'une feuille d'étanchéité pour une porte de véhicule automobile, conforme à l'invention,
- la Fig. 3 est une vue de côté du dispositif de pose conforme à l'invention,
- la Fig. 4 est une vue schématique de face du dispositif de pose conforme à l'invention.

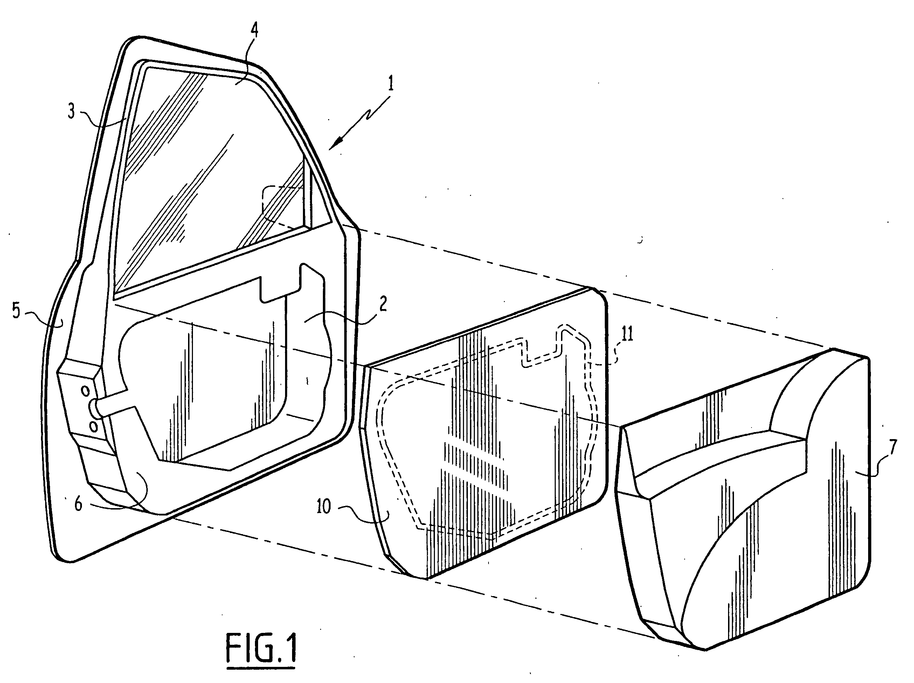

Sur la Fig. 1, on a représenté schématiquement une porte de véhicule automobile désignée par la référence générale 1.

De manière classique, cette porte 1 comprend une partie inférieure formant un caisson 2 et une partie supérieure formant un cadre 3 délimitant une ouverture 4 obturable par une vitre, non représentée. Le caisson 2 comporte une paroi métallique externe 5, une doublure métallique 6 interne et un panneau interne 7 de garnissage réalisé de préférence en matériau synthétique.

La porte comprend aussi une feuille d'étanchéité 10 en matériau souple interposée entre la doublure 6 et le panneau interne 7.

Cette feuille d'étanchéité 10 sépare une zone sèche du caisson 2 d'une zone humide de ce caisson 2. La zone humide reçoit notamment les eaux de pluie pénétrant dans le caisson à travers une fente de passage d'une vitre, non représentée.

De manière classique, la feuille d'étanchéité 10 comporte sur sa face destinée à être appliquée sur la doublure 6, un cordon 11 de produit adhésif, comme par exemple un cordon de colle, dont le contour correspond sensiblement au contour de la doublure 6.

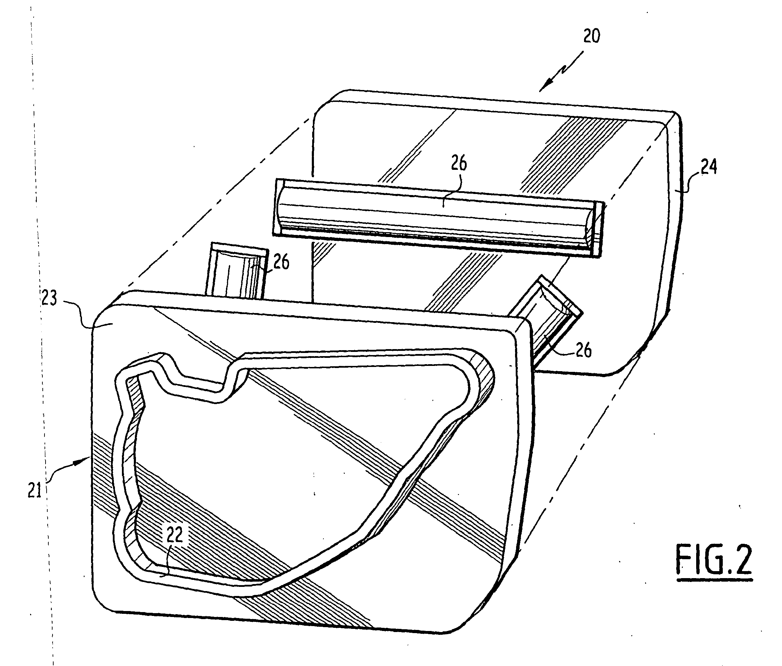

La feuille d'étanchéité 10 est montée sur la doublure 6 de la porte 1 au moyen d'un dispositif de pose désigné dans son ensemble par la référence 20 et représenté sur les Figs. 2 à 4.

Le dispositif de pose 20 comprend un outil 21 qui se compose, d'une part, d'une contre-forme 22 réalisée en matériau souple et ayant un contour correspondant sensiblement au contour du cordon 11 de produit adhésif de la feuille d'étanchéité 10 et, d'autre part, une plaque support 23 réalisée en matériau semi-rigide et portant cette contre-forme 22.

Le matériau souple de la contre-forme 22 possède une dureté comprise entre 30 et 50 SHORE A et de préférence égale à 40 SHORE A et est par exemple du polyuréthane.

Le matériau semi-rigide composant la plaque support 23 a une dureté comprise entre 80 et 110 SHORE A et de préférence égale à 90 SHORE A et est par exemple du polyuréthane.

D'une manière générale, la rigidité globale de l'outil 21 formée par la contre-forme 22 et la plaque support 23 est inférieure à la rigidité de la doublure 6 de la porte 1.

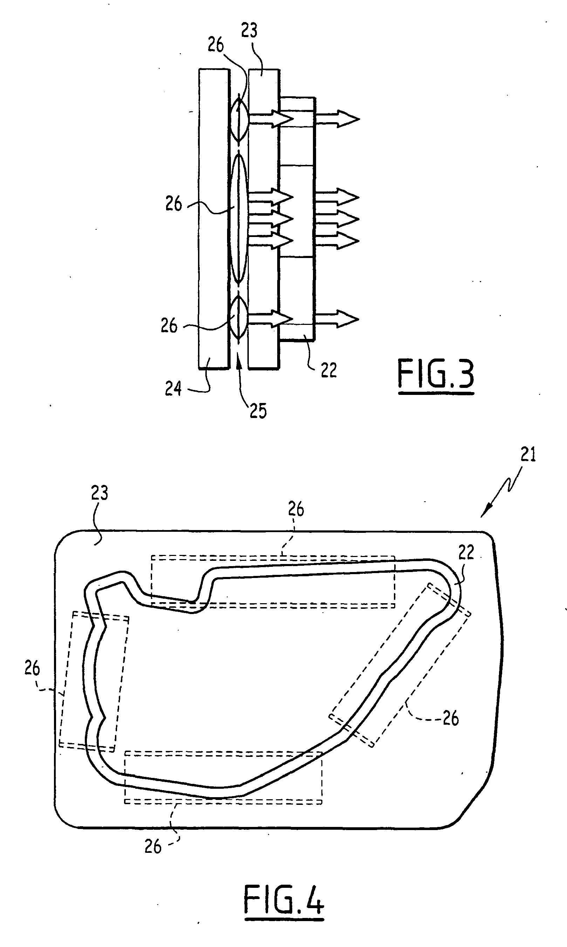

Ainsi que montré sur les Figs. 2 et 3, le dispositif de pose 20 comprend également une armature 24 en matériau rigide portant l'outil 21 et un actionneur désigné par la référence générale 25 (Fig. 3) interposé entre l'armature 24 et la plaque support 23 de l'outil 21.

Cet actionneur 25 a pour rôle d'exercer sur l'outil 21 un effort de mise en pression afin d'écraser le cordon adhésif 11 de la feuille d'étanchéité au moment de la pose de cette feuille d'étanchéité 10, comme on le verra ultérieurement.

A cet effet, selon un premier mode de réalisation, l'actionneur 21 est constitué par au moins une vessie gonflable 26.

Dans l'exemple de réalisation représenté sur les Figs. 3 et 4, l'actionneur 25 est constitué par plusieurs vessies gonflables 26 réparties le long du contour de la contre-forme 22.

Selon une variante, l'actionneur 25 peut être constitué par une seule vessie gonflable 26 dont le contour correspond sensiblement au contour de la contre-forme 22.

Selon un second mode de réalisation, l'actionneur 25 est formé par au moins un vérin hydraulique ou pneumatique qui agit sur la plaque support de l'outil 21.

La pose de la feuille d'étanchéité 10 sur la doublure 6 de la porte 1 est réalisée de la façon suivante.

Tout d'abord, cette feuille d'étanchéité 10 est posée sur la doublure 6 en appliquant le cordon 11 de produit adhésif de ladite feuille d'étanchéité 10 sur cette doublure 6. Ensuite, le dispositif de pose 20 est appliqué sur la feuille d'étanchéité 10 de telle sorte que la contre-forme 22 vienne directement en appui sur la face de la feuille d'étanchéité opposée à celle comportant le cordon 11 de produit adhésif.

Après cette première phase, les vessies gonflables 26 sont mises en pression ce qui a pour effet d'exercer sur la contre-forme 22 par l'intermédiaire de la plaque support 23 un effort de mise en pression de façon à écraser ledit cordon 11 de produit adhésif et à fixer la feuille d'étanchéité 10 sur la doublure 6 de la porte 1.

Compte tenu de la nature du matériau composant la contre-forme 22 et qui est un matériau souple, cette contre-forme 22 agit de manière uniforme sur tout le contour du cordon 11 de produit adhésif et elle transmet directement à la feuille d'étanchéité 10, l'effort de mise en pression. La contre-forme 22 a pour rôle de compenser les dérives locales du galbe de la surface de fixation de la feuille d'étanchéité 10 sur la doublure 6 de la porte 1.

La plaque support 23 de la contre-forme 22 de l'outil 21 permet de compenser les déformations globales de la doublure 6 de la porte 1 dans la phase de mise en pression de la feuille d'étanchéité 10.

La faible rigidité de l'ensemble de l'outil par rapport à la rigidité de la doublure 6 de porte permet de diminuer de façon significative l'influence de la déformation de cette doublure 6 sur la répartition de l'effort de mise en pression.

Par conséquent, le dispositif de pose selon l'invention permet d'obtenir une nette amélioration de l'homogénéité de l'effort de mise en pression pour l'écrasement du cordon de produit adhésif de la feuille d'étanchéité et, de ce fait, d'assurer un collage uniforme de cette feuille d'étanchéité sur son pourtour, évitant ainsi les défauts d'étanchéité.

## Revendications

1. Procédé de pose d'une feuille d'étanchéité (10) d'une porte (1) de véhicule automobile, la feuille d'étanchéité (10) comprenant, sur sa face destinée à être appliquée sur une doublure (6) interne de ladite porte (1), un cordon (11) de produit adhésif de contour correspondant sensiblement au contour de la doublure (6), **caractérisé en ce que :**
- on pose sur la doublure (6) de porte la feuille d'étanchéité (10) munie du cordon (11) de produit adhésif en appliquant ce cordon (11) sur ladite doublure (6),
- on applique sur la feuille d'étanchéité (10), une contre-forme (22) en matériau souple ayant un contour correspondant au contour dudit cordon (11) et portée par une plaque support (23) en matériau semi-rigide, et
- on exerce sur la contre-forme (22) par l'intermédiaire de la plaque support (23), un effort de mise en pression pour écraser le cordon (11) de produit adhésif et fixer la feuille d'étanchéité (10) sur la doublure (6) de la porte (1).

2. Dispositif de pose d'une feuille d'étanchéité (10) d'une porte (1) d'un véhicule automobile, la feuille d'étanchéité (10) comprenant, sur sa face destinée à être appliquée sur une doublure (6) interne de ladite porte (1), un cordon (11) de produit adhésif de contour correspondant sensiblement au contour de la doublure (6), **caractérisé en ce qu**'il comprend, d'une part, un outil (21) comportant une contre-forme (22) en matériau souple ayant un contour correspondant au contour dudit cordon (11), destinée à être appliquée sur la face de la feuille d'étanchéité (10) opposée à celle munie de ce cordon (11) et une plaque support (23) en matériau semi-rigide portant ladite contre-forme (22) et, d'autre part, une armature (24) en matériau rigide portant l'outil (21) et un actionneur (25) interposé entre l'armature (24) et la plaque support (23) et exerçant sur l'outil (21) un effort de mise en pression pour écraser le cordon (11) de produit adhésif.

3. Dispositif selon la revendication 2, **caractérisé en ce que** la rigidité globale de l'outil (20) est inférieure à la rigidité de la doublure (6) de la porte (1).

4. Dispositif selon la revendication 2 ou 3, **caractérisé en ce que** le matériau souple de la contre-forme (22) a une dureté comprise entre 30 et 50 SHORE A et de préférence égale à 40 SHORE A.

5. Dispositif selon l'une quelconque des revendications 2 à 4, **caractérisé en ce que** le matériau semi-rigide de la plaque support (23) a une dureté comprise entre 80 et 110 SHORE A et de préférence égale à 90 SHORE A.

6. Dispositif selon l'une quelconque des revendications 2 à 5, **caractérisé en ce que** l'actionneur (25) est formé par au moins une vessie gonflable (26) de contour correspondant sensiblement au contour de la contre-forme (22).

7. Dispositif selon l'une quelconque des revendications 2 à 5, **caractérisé en ce que** l'actionneur (25) est formé par plusieurs vessies gonflables (26) réparties le long du contour de la contre-forme (22).

8. Dispositif selon l'une quelconque des revendications 2 à 5, **caractérisé en ce que** l'actionneur (25) est formé par au moins un vérin hydraulique ou pneumatique.

## Claims

1. Procedure for fitting an automotive vehicle door (1) sealing membrane (10), where the sealing membrane (10) includes on its surface intended to be applied to an internal lining (6) of the said door (1) a bead (11) of adhesive product whose contour effectively matches the contour of the lining (6), **characterised by** the fact that:
- the sealing membrane (10) applied with the bead (11) of adhesive product is placed onto the door lining (6) by applying this bead (11) of adhesive material onto the said lining (6),
- a counter-shape (22) made of flexible material which has a contour which corresponds to the contour of the said bead (11) and which is carried on a support plate (23) made of semi-rigid material is applied to the sealing membrane (10), and
- a pressing force is exerted onto the counter-shape (22) through the support plate (23) to flatten the bead (11) of adhesive product and to fix the sealing membrane (10) onto the lining (6) of the door (1).

2. Device for fitting an automotive door (1) sealing membrane (10), where the sealing membrane (10) includes, on a surface intended to be applied onto an internal lining (6) of the said door (1), a bead (11) of adhesive product whose contour effectively corresponds to the contour of the lining (6), **characterised by** the fact that it includes, on the one hand, a tool (21) which possesses a counter-shape (22) made of flexible material which has a contour which corresponds to the contour of the said bead (11), intended to be applied onto the face of the sealing membrane (10) away from that which carries this bead (11) and a support plate (23) made of semi-rigid material which carries the aforementioned counter-shape (22), and on the other hand a framework (24) made of rigid material holding the tool (21) and an actuator (25) located between the framework (24) and the support plate (23) which exerts a pressing force on the tool (21) in order to flatten the said bead (11) of adhesive product.

3. Device according to claim 2, **characterised by** the fact that the overall rigidity of the tool (20) is less than the rigidity of the lining (6) of the door (1).

4. Device according to claim 2 or 3, **characterised by** the fact that the flexible material of the counter-shape (22) has a hardness which is between 30 and 50 SHORE A and preferably equal to 40 SHORE A,

5. Device according to any of claims 2 to 4 whatsoever, **characterised by** the fact that the semi-rigid material of the support plate (23) has a hardness which is between 80 and 110 SHORE A and preferably equal to 90 SHORE A.

6. Device as described in any of claims 2 to 5 whatsoever, **characterised by** the fact that the actuator (25) is formed of at least one inflatable bladder (26) whose contours effectively correspond to the contour of the counter-shape (22).

7. Device as described in any of claims 2 to 5 whatsoever, **characterised by** the fact that the actuator (25) is formed of several inflatable bladders (26) distributed over the contour of the counter-shape (22).

8. Device as described in any of claims 2 to 5 whatsoever, **characterised by** the fact that the actuator (25) is formed of at least one hydraulic or pneumatic piston.

## Patentansprüche

1. Verfahren für den Einbau eines Feuchtschutzes (10) in einer Kraftfahrzeug-Tür (1), wobei der Feuchtschutz (10) auf der Seite, die auf einer inneren Verkleidung (6) dieser Tür (1) anzubringen ist, einen Streifen (11) aus Klebematerial umfasst, dessen Umrisslinie im Wesentlichen dem Umriss der Verkleidung (6) entspricht,
**dadurch gekennzeichnet,**
**dass**
- ein mit dem Streifen (11) aus Klebematerial versehener Feuchtschutz (10) in der Verkleidung (6) der Tür eingebaut wird, indem man den Streifen (11) auf der Verkleidung (6) befestigt,
- auf dem Feuchtschutz (10) eine Gegenform (22) aus elastischem Material angebracht wird, deren Umriss der Umrisslinie des Streifens (11) entspricht und die von einer Trägerplatte (23) aus halbsteifem Material gehalten wird, und
- mittels der Trägerplatte (23) eine Druckkraft auf die Gegenform (22) ausgeübt wird, um den Streifen (11) aus Klebematerial zusammenzudrücken und den Feuchtschutz (10) in der Verkleidung (6) der Tür (1) zu befestigen.

2. Vorrichtung für den Einbau eines Feuchtschutzes (10) in einer Kraftfahrzeug-Tür (1), wobei der Feuchtschutz (10) auf der Seite, die auf einer inneren Verkleidung (6) dieser Tür (1) anzubringen ist, einen Streifen (11) aus Klebematerial umfasst, dessen Umrisslinie im Wesentlichen dem Umriss der Verkleidung (6) entspricht,
**dadurch gekennzeichnet,**
**dass** sie einerseits ein Werkzeug (21) umfasst, welches eine Gegenform (22) aus elastischem Material beinhaltet, deren Umriss der Umrisslinie des Streifens (11) entspricht und auf der Seite des Feuchtschutzes (10), welche der mit dem Streifen (11) versehenen Seite gegenüberliegt, angebracht werden soll, sowie eine Trägerplatte (23) aus halbsteifem Material, welche die Gegenform (22) hält, und andererseits eine Armatur (24) aus steifem Material, welche das Werkzeug (21) und ein zwischen die Armatur (24) und die Trägerplatte (23) eingelegtes Betätigungsgerät (25), welches eine Druckkraft auf das Werkzeug (21) ausübt, um den Streifen (11) aus Klebematerial zusammenzudrücken, umfasst.

3. Vorrichtung nach Anspruch 2,
**dadurch gekennzeichnet,**
**dass** die Gesamtsteifigkeit des Werkzeugs (20) geringer ist als die Steifigkeit der Verkleidung (6) der Tür (1).

4. Vorrichtung nach Anspruch 2 oder 3,
**dadurch gekennzeichnet,**
**dass** das elastische Material der Gegenform (22) eine Härte zwischen 30 und 50 SHORE A und vorzugsweise von 40 SHORE A aufweist.

5. Vorrichtung nach einem der Ansprüche 2 bis 4,
**dadurch gekennzeichnet,**
**dass** das halbsteife Material der Trägerplatte (23) eine Härte zwischen 80 und 110 SHORE A und vorzugsweise von 90 SHORE A aufweist.

6. Vorrichtung nach einem der Ansprüche 2 bis 5,
**dadurch gekennzeichnet,**
**dass** das Betätigungsgerät (25) aus mindestens einer aufblasbaren Blase (26), deren Umriss im Wesentlichen dem Umriss der Gegenform (22) entspricht, besteht.

7. Vorrichtung nach einem der Ansprüche 2 bis 5,
**dadurch gekennzeichnet,**
**dass** das Betätigungsgerät (25) aus mehreren aufblasbaren Blasen (26), die entlang dem Umriss der Gegenform (22) verteilt angeordnet sind, besteht.

8. Vorrichtung nach einem der Ansprüche 2 bis 5,
**dadurch gekennzeichnet,**
**dass** das Betätigungsgerät (25) aus mindestens einem hydraulischen oder pneumatischen Hubzylinder besteht.
